(19)

**Europäisches Patentamt**
**European Patent Office**
**Office européen des brevets**

(11)  **EP 4 745 177 A1**

(12)  **EUROPEAN PATENT APPLICATION**
published in accordance with Art. 153(4) EPC

(43) Date of publication:
**20.05.2026  Bulletin 2026/21**

(21) Application number: **24839532.9**

(22) Date of filing: **27.06.2024**

(51) International Patent Classification (IPC):
**C08G 63/91** (2006.01)    **C08J 5/18** (2006.01)

(52) Cooperative Patent Classification (CPC):
**C08G 63/91; C08J 5/18**

(86) International application number:
**PCT/JP2024/023273**

(87) International publication number:
**WO 2025/013639 (16.01.2025 Gazette 2025/03)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority:  **13.07.2023   JP 2023115347**

(71) Applicants:
• **Nagoya Institute Of Technology**
  **Nagoya-shi, Aichi 466-8555 (JP)**

• **Toyobo Co., Ltd.**
  **Kita-ku**
  **Osaka-shi, Osaka 530-0001 (JP)**

(72) Inventors:
• **HAYASHI, Mikihiro**
  **Nagoya-shi, Aichi 466-8555 (JP)**
• **UCHIYAMA, Shoko**
  **Otsu-shi, Shiga 520-0292 (JP)**
• **KATO, Mio**
  **Otsu-shi, Shiga 520-0292 (JP)**

(74) Representative: **Müller-Boré & Partner**
  **Patentanwälte PartG mbB**
  **Friedenheimer Brücke 21**
  **80639 München (DE)**

(54)  **METHOD FOR PRODUCING CROSSLINKABLE POLYESTER COMPOSITION**

(57)    A method for producing a crosslinkable polyester composition that enables facile provision of a polyester, in a highly processable state, capable of having bond-exchangeable dynamic covalent bonds in the future is provided. A cured product having bond-exchangeable dynamic covalent bonds from the crosslinkable polyester composition that exhibits high processability is provided. A method for producing the cured product from the crosslinkable polyester composition that exhibits high processability is provided. A formed article including the crosslinkable polyester composition that exhibits high processability is provided. A method for producing a crosslinkable polyester composition, including the step of kneading a copolyester in a molten state by heating with a polyfunctional epoxy compound having a plurality of epoxy groups and a transesterification catalyst. A formed article containing a crosslinkable polyester composition, wherein the crosslinkable polyester composition comprises a copolyester, a polyfunctional epoxy compound having a plurality of epoxy groups, and a transesterification catalyst, wherein the formed article has a gel fraction of less than 30%, and wherein the formed article is in the form of a rod, a filament or a yarn, a granule, or a flake.

[FIG. 4]

**Description**

TECHNICAL FIELD

The present invention relates to a method for producing a crosslinkable polyester composition, a method for producing a crosslinked polyester composition, and a formed article containing a crosslinkable polyester composition.

BACKGROUND ART

A polyester is a polycondensate synthesized by dehydration condensation of a polycarboxylic acid and a polyhydric alcohol, and is exemplified by a polymer produced from terephthalic acid or an ester-forming derivative thereof, and ethylene glycol. Owing to its excellent versatility and practicality, polyester is suitably used as a material for, for example, films, sheets, fibers, and bottles. Furthermore, owing to its excellent mechanical, weather resistance, and chemical resistance properties, polyester is expected to be used in various applications, including electrical insulation, solar cells, and industrial components such as tire cords.

Polyesters with such properties are also used in the form of crosslinked polyesters, in which polyester molecules are crosslinked with each other by a crosslinking agent. However, conventional crosslinked polyesters cannot be reformed, as polyester molecules are crosslinked via covalent bonds. In contrast, in recent years, increasing attention has been paid to crosslinked polyesters in which polyester molecules are crosslinked via bond-exchangeable dynamic covalent bonds. Such crosslinked polyesters in which crosslinking is formed via bond-exchangeable dynamic covalent bonds undergo a bond exchange reaction upon further heating, thereby enabling the crosslinked polyesters to be reformed.

As an exemplary method for producing a crosslinked polyester in which crosslinking is formed by bond-exchangeable dynamic covalent bonds, for example, Non-Patent Document 1 discloses the production of pellets from polyethylene terephthalate (PET), bisphenol A diglycidyl ether, and 2,2-bis(hydroxymethyl)-2,2',2"-nitrilotriethanol (BIS-TRIS) by heating, kneading, and melting at a temperature in the range of from 240°C to 270°C using a twin-screw extruder, and post-curing the resulting pellets at 205°C for 10 hours under vacuum. Also, according to Non-Patent Document 2, polybutylene terephthalate (PBT), bisphenol A diglycidyl ether, and zinc acetylacetonate hydrate are heated, melted, and kneaded at 270°C using a twin-screw extruder, and the resulting molten material is injected into a mold having the shape of a test piece preheated to 200°C and held therein. Meanwhile, Non-Patent Document 3, authored by the present inventors, discloses a method for producing a bond-exchangeable resin film with a gel fraction of approximately 100%, wherein a mixture of an amorphous polyester resin, 4,4'-methylenebis(N,N-diglycidylaniline), and 1,8-diazabicyclo[5.4.0]-7-undecene is mixed in the presence of THF, THF is then removed by casting and vacuum drying, and the resulting solid material is heated at 200°C for 24 hours.

CITATION LIST

NON-PATENT DOCUMENTS

Non-Patent Document 1: Jianfan Qiu, et al., Macromolecules, 2021, 54(2), 703-712.

Non-Patent Document 2: L.Farge, et al., Macromolecules.2021, 54(4), 1838-1849.

Non-Patent Document 3: Mikihiro Hayashi, et al., Journal of Materials Chemistry A, 2022, 34(10), 17406-17414.

SUMMARY OF THE INVENTION

PROBLEMS TO BE SOLVED BY THE INVENTION

Since both the polyethylene terephthalate disclosed in Non-Patent Document 1 and the polybutylene terephthalate disclosed in Non-Patent Document 2 are crystalline, the temperature for heating, melting, and kneading using a twin-screw extruder becomes elevated, which results in the extrudates already being crosslinked at the time of extrusion from the twin-screw extruder. As a result, the extrudates exhibit inferior fluidity and thus poor processability. In contrast, in Non-Patent Document 3, a mixture containing an amorphous polyester resin is mixed in the presence of THF, requiring a large amount of solvent. Furthermore, after the mixture is prepared, approximately 24 hours are required for removing THF and drying. Therefore, there has been room for improvement before this method can be adopted as an industrial production method.

The present invention has been made in view of the above circumstances. It is an object of the present invention to provide a method for producing a crosslinkable polyester composition that enables facile provision of a polyester, in a highly processable state, capable of having bond-exchangeable dynamic covalent bonds in the future. Another object of the present invention is to provide a cured product (crosslinked polyester composition) having bond-exchangeable dynamic covalent bonds from the crosslinkable polyester composition that exhibits high processability. Still another object of the present invention is to provide a method for producing the cured product (crosslinked polyester composition) from the crosslinkable polyester composition that exhibits high processability. Still another object of the present invention is to provide a formed article including the crosslinkable polyester composition that exhibits high processability.

SOLUTION TO THE PROBLEMS

The present invention has the following features.

[1] A method for producing a crosslinkable polyester composition, comprising the step of kneading a copolyester in a molten state by heating with a polyfunctional epoxy compound having a plurality of epoxy groups and a transesterification catalyst.
[2] The method for producing the crosslinkable polyester composition according to [1], further comprising the step of forming a kneaded mixture into a predetermined form after the kneading.
[3] The method for producing the crosslinkable polyester composition according [1] or [2],
wherein the copolyester is an amorphous polyester.
[4] The method for producing the crosslinkable polyester composition according to any one of [1] to [3],
wherein the copolyester comprises:
a first unit containing ethylene terephthalate or butylene terephthalate; and
further comprises:

an acid component comprising at least one selected from the group consisting of the following components, and/or
an alcohol component comprising at least one selected from the group consisting of the following components:

acid components: terephthalic acid, isophthalic acid, and sebacic acid, and
alcohol components: ethylene glycol, 2,2-dimethyl-1,3-propanediol, and 1,4-butanediol.

[5] The method for producing the crosslinkable polyester composition according to any one of [1] to [4],
wherein the transesterification catalyst does not contain a hydroxy group.
[6] The method for producing the crosslinkable polyester composition according to any one of [1] to [5],
wherein the kneading is conducted at a temperature equal to or lower than a glass transition temperature (Tg) of the copolyester + 120°C.
[7] The method for producing the crosslinkable polyester composition according to any one of [1] to [6],
wherein the kneading is conducted under solvent-free conditions.
[8] The method for producing the crosslinkable polyester composition according to any one of [1] to [7],
wherein the kneading is conducted using a twin-screw kneading extruder.
[9] The method for producing the crosslinkable polyester composition according to [8],
wherein the twin-screw kneading extruder extrudes a formed article containing the crosslinkable polyester composition in the form of a sheet or a film.
[10] A method for producing a crosslinked polyester composition, comprising:

the step of producing the crosslinkable polyester composition by the method according to any one of [1] to [9]; and
the subsequent step of crosslinking the crosslinkable polyester composition by heating.

[11] The method for producing the crosslinked polyester composition according to [10],
wherein the crosslinkable polyester composition is crosslinked by heating at a temperature higher than a temperature of the kneading.
[12] The method for producing the crosslinked polyester composition according to [10] or [11],
wherein the crosslinkable polyester composition is crosslinked by heating at a temperature in a range of from 120°C to 250°C, for 1 hour or longer.
[13] A formed article comprising a crosslinkable polyester composition,
wherein the crosslinkable polyester composition comprises:

a copolyester,
a polyfunctional epoxy compound having a plurality of epoxy groups; and
a transesterification catalyst,
wherein the formed article has a gel fraction of less than 30%, and
wherein the formed article is in the form of a rod, a filament or a yarn, a granule, or a flake.

[14] A formed article comprising a crosslinkable polyester composition,

wherein the crosslinkable polyester composition comprises:

a copolyester,
a polyfunctional epoxy compound having a plurality of epoxy groups; and
a transesterification catalyst,

wherein the formed article has a gel fraction of less than 30%, and
wherein the formed article is in the form of a sheet or a film having a thickness of 20 $\mu$m or more.

[15] The formed article comprising the crosslinkable polyester composition according to [13] or [14], wherein the formed article has a gel fraction of 30% or more by heating at a temperature in a range of from 120°C to 250°C for 3 hours.

EFFECTS OF THE INVENTION

According to the present invention, since the copolyester is kneaded with the polyfunctional epoxy compound having a plurality of epoxy groups and the transesterification catalyst, the resulting kneaded mixture can form bond-exchangeable dynamic covalent bonds in the future. Furthermore, since this kneaded mixture remains in uncrosslinked state (in other words, crosslinkable state) during the kneading by heating, excellent processability can be achieved. The production of the crosslinkable polyester composition in such a manner enables the introduction of bond-exchangeable dynamic covalent bonds by subsequent heating, and a crosslinked polyester having bond-exchangeable dynamic covalent bonds can be readily provided. When the crosslinkable polyester is crosslinked via bond-exchangeable dynamic covalent bonds, a bond exchange reaction can be still induced by heating even after crosslinking, thereby enabling the crosslinked polyester to be reformed.

BRIEF DESCRIPTION OF DRAWINGS

[FIG. 1A] FIG. 1A shows GPC chromatograms measured for the crosslinkable polyester compositions 1 and 2, obtained in Examples 1 and 2, respectively, and the copolyester A1.
[FIG. 1B] FIG. 1B shows GPC chromatograms measured for the comparative crosslinkable polyester compositions 1 and 2, obtained in Comparative Examples 1 and 2, respectively, and the copolyester A1.
[FIG. 1C] FIG. 1C shows GPC chromatograms measured for the comparative crosslinkable polyester composition 3, obtained in Comparative Example 3, and the copolyester A1.
[FIG. 2A] FIG. 2A shows the isothermal time-resolved viscoelastic spectra measured for the crosslinkable polyester composition 1 obtained in Example 1.
[FIG. 2B] FIG. 2B shows the isothermal time-resolved viscoelastic spectra measured for the crosslinkable polyester composition 2 obtained in Example 2.
[FIG. 2C] FIG. 2C shows the isothermal time-resolved viscoelastic spectra measured for the comparative crosslinkable polyester composition 1 obtained in Comparative Example 1.
[FIG. 2D] FIG. 2D shows the isothermal time-resolved viscoelastic spectra measured for the comparative crosslinkable polyester composition 3 obtained in Comparative Example 3.
[FIG. 3] FIG. 3 is a graph showing the relationship between the heating time and the gel fraction calculated from the samples obtained by heating the crosslinkable polyester compositions 1 and 2.
[FIG. 4] FIG. 4 is a stress relaxation spectra measured for the samples obtained by heating the crosslinkable polyester composition 1.
[FIG. 5A] FIG. 5A is a photograph showing the test piece before heating in the reformability test, which was cut from the sample obtained by heating the crosslinkable polyester composition 1 at 180°C for 3 hours.
[FIG. 5B] FIG. 5B is a photograph showing the test piece after heating in the reformability test, which was cut from the sample obtained by heating the crosslinkable polyester composition 1 at 180°C for 3 hours.

DESCRIPTION OF EMBODIMENTS

The method for producing a crosslinkable polyester composition according to the embodiments of the present invention is characterized in that the method includes the step of kneading a copolyester in a molten state by heating with a polyfunctional epoxy compound having a plurality of epoxy groups and a transesterification catalyst. In the present specification, the term "crosslinkable polyester composition" refers to a composition containing a polyester before being crosslinked, in other words, a composition containing a polyester having crosslinkability and capable of undergoing crosslinking via an epoxy ring-opening reaction and a bond-exchange reaction upon heating. Also, a composition obtained by heating the crosslinkable polyester composition and crosslinking polyester molecules is herein referred to as a "crosslinked polyester composition."

(Copolyester)

The copolyester used in the embodiments of the present invention may be an aliphatic polyester or an aromatic polyester, or a combination of an aliphatic polyester and an aromatic polyester.

Examples of the method for producing the copolyester include: a method in which an acid component, an alcohol component, and a dicarboxylic acid having a nucleophilic reactive group (e.g., a thiol group) are polycondensed, followed by a reaction between the nucleophilic reactive group of the dicarboxylic acid and an unsaturated carboxylic acid; and a method in which an acid component, an alcohol component, and an unsaturated polycarboxylic acid or an anhydride thereof are polycondensed, followed by a reaction between the unsaturated group of the unsaturated polycarboxylic acid and a carboxylic acid having a nucleophilic reactive group.

As the acid component, dicarboxylic acid is mainly used (for example, preferably in an amount of 60 parts by mole or more, and more preferably 80 parts by mole or more, based on 100 parts by mole of the acid component). Examples of the dicarboxylic acid include aromatic dicarboxylic acids such as phthalic acid, isophthalic acid, terephthalic acid, and 2,6-naphthalenedicarboxylic acid; aliphatic dicarboxylic acids such as succinic acid, glutaric acid, adipic acid, pimelic acid, suberic acid, azelaic acid, sebacic acid, dodecanedioic acid, and dimer acid; alicyclic dicarboxylic acids such as 1,4-cyclohexanedicarboxylic acid, tetrahydrophthalic acid, hexahydroisophthalic acid, and 1,2-cyclohexanedicarboxylic acid; and unsaturated dicarboxylic acids such as fumaric acid, maleic acid, and an adduct of terpene with maleic acid. Any one of these dicarboxylic acids may be used alone, or two or more kinds may be used in combination. The acid component preferably includes at least one selected from the group consisting of an aromatic dicarboxylic acid and an aliphatic dicarboxylic acid. Tricarboxylic or tetracarboxylic acids such as trimellitic acid, pyromellitic acid, and 3,3',4,4'-benzophenonetetracarboxylic acid may also be used as the acid component. Tricarboxylic and tetracarboxylic acids are preferably supplied in the form of their acid anhydrides in the polycondensation reaction.

Examples of the alcohol component include aliphatic glycols such as ethylene glycol, 1,2-propylene glycol, 1,3-propanediol, 2-methyl-1,3-propanediol, 2,2-dimethyl-1,3-propanediol, 1,2-butanediol, 1,3-butanediol, 1,4-butanediol, 1,3-pentanediol, 1,4-pentanediol, 1,5-pentanediol, 3-methyl-1,5-pentanediol, 2,4-diethyl-1,5-pentanediol, 1,6-hexanediol, 3-methyl-1,6-hexanediol, 4-methyl-1,7-heptanediol, 2-methyl-1,8-octanediol, 4-methyl-1,8-octanediol, 4-propyl-1,8-octanediol, and 1,9-nonanediol; polyether glycols such as diethylene glycol and triethylene glycol; polyalkylene glycols such as polyethylene glycol and polytetramethylene glycol; alicyclic polyols such as 1,4-cyclohexanediol, 1,2-cyclohexanedimethanol, 1,3-cyclohexanedimethanol, 1,4-cyclohexanedimethanol, tricyclodecane glycols, and hydrogenated bisphenols; glycol-modified aromatic dicarboxylic acids such as ethylene-glycol-modified terephthalic acid (e.g., bis(2-hydroxyethyl)terephthalate (BHET)), propylene glycol-modified terephthalic acid, ethylene glycol-modified isophthalic acid, propylene glycol-modified isophthalic acid, ethylene glycol-modified ortho-phthalic acid, and propylene glycol-modified ortho-phthalic acid; and alkylene oxide adducts of phenols such as an ethylene oxide adduct of bisphenol A and a propylene oxide adduct of bisphenol A. Any one of these alcohol components may be used alone, or two or more kinds may be used in combination. An aliphatic glycol is preferably used as the alcohol component.

The copolyester preferably contains, for example, a first unit containing ethylene terephthalate or butylene terephthalate, and further contains an acid component containing at least one selected from the group consisting of the following components, and/or an alcohol component containing at least one selected from the group consisting of the following components:

acid components: terephthalic acid, isophthalic acid, and sebacic acid, and
alcohol components: ethylene glycol, 2,2-dimethyl-1,3-propanediol, and 1,4-butanediol.

As the dicarboxylic acid containing a nucleophilic reactive group, for example, a dicarboxylic acid containing a thiol group as a nucleophilic reactive group may be used, and an aliphatic dicarboxylic acid having about 4 to 10 carbon atoms and containing a thiol group, such as thiomalic acid, is preferably used.

As the unsaturated carboxylic acid that reacts with the nucleophilic reactive group of the dicarboxylic acid, for example, aliphatic α, β-unsaturated monocarboxylic acids having about 3 to 10 carbon atoms, such as acrylic acid, methacrylic acid, crotonic acid, and isocrotonic acid, may be used.

As the unsaturated polycarboxylic acid, for example, aliphatic α, β-unsaturated dicarboxylic acids having about 4 to 10 carbon atoms, such as maleic acid and fumaric acid, may be used.

As the carboxylic acid having a nucleophilic reactive group that reacts with the unsaturated group of the unsaturated polycarboxylic acid, for example, aliphatic monocarboxylic acids having about 2 to 10 carbon atoms and containing a thiol group, such as thioglycolic acid and mercaptopropionic acid, may be used.

The copolyester preferably has a number-average molecular weight (Mn) of, for example, from 6000 to 50000. When the number-average molecular weight (Mn) of the copolyester is 6000 or more, heat resistance can be improved. The number-average molecular weight (Mn) is more preferably 6500 or more, and further preferably 7000 or more. However, when the number-average molecular weight (Mn) of the copolyester becomes significantly high, fluidity decreases due to increased viscosity, making kneading difficult. Therefore, the number-average molecular weight (Mn) is preferably 50000 or less, more preferably 40000 or less, further preferably 28000 or less, and particularly preferably 25000 or less. Accordingly, the number-average molecular weight (Mn) of the copolyester is, for example, more preferably from 6500 to 40000, further preferably from 7000 to 28000, and particularly preferably from 7000 to 25000.

The copolyester preferably has an acid value of, for example, from 0.1 mg KOH/g to 5 mg KOH/g, more preferably from 0.3 mg KOH/g to 3 mg KOH/g, and further preferably from 0.5 mg KOH/g to 2.0 mg KOH/g. As the acid value increases, the number of crosslinking points increases, which improves heat resistance.

The copolyester preferably has a glass transition temperature (Tg) in the range of, for example, from -15°C to 130°C. When the glass transition temperature (Tg) of the copolyester is 130°C or lower, the crosslinkable polyester composition exhibits good fluidity. Accordingly, the heating temperature for kneading the copolyester with the polyfunctional epoxy compound having a plurality of epoxy groups and the transesterification catalyst can be readily lowered. As a result, though the polyester is readily crosslinkable, the crosslinking can be suppressed, and the fluidity of the kneaded mixture can be readily increased. The glass transition temperature (Tg) of the copolyester is more preferably 100°C or lower, and further preferably 80°C or lower. The lower limit of the glass transition temperature (Tg) of the copolyester is not particularly limited, and is, for example, preferably -15°C or higher, more preferably 1°C or higher, and further preferably 3°C or higher, from the viewpoint of mechanical properties after curing. Accordingly, the glass transition temperature (Tg) of the copolyester is more preferably from 1°C to 100°C, and further preferably from 3°C to 80°C.

The copolyester is preferably an amorphous polyester. The term "amorphous" refers to a polyester that does not have a distinct melting point. The use of an amorphous polyester makes it easier to lower the heating temperature required for kneading the copolyester with the polyfunctional epoxy compound having a plurality of epoxy groups and the transesterification catalyst.

(Polyfunctional Epoxy Compound)

The polyfunctional epoxy compound having a plurality of epoxy groups used in the embodiments of the present invention refers to an epoxy compound having two or more epoxy groups in a molecule. The polyfunctional epoxy compound may contain three or more, or four or more functional groups (epoxy groups), and more preferably four or more functional groups. The upper limit of the number of the epoxy groups is not particularly limited, and may be, for example, six or less, or five or less. Accordingly, the polyfunctional epoxy compound preferably contains two to six functional groups (epoxy groups), more preferably three to five, and further preferably four to five.

As the polyfunctional epoxy compound, for example, bisphenol A diglycidyl ether (hereinafter sometimes referred to as DGEBA), and 4,4'-methylenebis(N,N-diglycidylaniline) may be used. Bisphenol A diglycidyl ether is a difunctional epoxy compound having two epoxy groups in a molecule, while 4,4'-methylenebis(N,N-diglycidylaniline) is a tetrafunctional epoxy compound having four epoxy groups in a molecule. Any one of these polyfunctional epoxy compounds may be used alone, or two or more kinds may be used in combination.

The polyfunctional epoxy compound is preferably used in an amount of, for example, 5 parts by mass or more, more preferably 8 parts by mass or more, and further preferably 10 parts by mass or more, and preferably 20 parts by mass or less, more preferably 18 parts by mass or less, further preferably 15 parts by mass or less, based on 100 parts by mass of the copolyester. When two or more types of the polyfunctional epoxy compounds are used, the amount refers to the total combined amount. Accordingly, the amount of the polyfunctional epoxy compound is preferably from 5 parts by mass to 20 parts by mass, more preferably from 8 parts by mass to 18 parts by mass, and further preferably from 10 parts by mass to 15 parts by mass, based on 100 parts by mass of the copolyester.

(Transesterification Catalyst)

The transesterification catalyst used in the embodiments of the preset invention may be a basic catalyst, an acid catalyst, or an inorganic salt catalyst (Lewis acid catalyst). Examples of the basic catalyst include 1,8-Diazabicyclo [5.4.0]-7-undecene (1,8-diazabicyclo[5.4.0]-7-undecene, hereinafter sometimes referred to as DBU), 1,5,7-Triazabicyclo [4.4.0]dec-5-ene (1,5,7-triazabicyclo[4.4.0]dec-5-ene, hereinafter sometimes referred to as TBD), and 1-Methylimidazole. Examples of the acid catalyst include p-Toluenesulfonic Acid. Examples of the inorganic salt catalyst include zinc acetate and Tin(II)2-Ethylhexanoate. Any one of these transesterification catalysts may be used alone, or two or more kinds may be used in combination.

The transesterification catalyst is preferably used in an amount of 20 parts by mass or less, more preferably 10 parts by mass or less, and further preferably 8 parts by mass or less, based on 100 parts by mass of the copolyester. The lower limit of the amount of the transesterification catalyst is, for example, preferably 1 part by mass or more, more preferably 2 parts by mass or more, and further preferably 3 parts by mass or more, based on 100 parts by mass of the copolyester. When two or more types of the transesterification catalysts are used, the amount refers to the total combined amount. Accordingly, the amount of the transesterification catalyst is preferably from 1 part by mass to 20 parts by mass, more preferably from 2 parts by mass to 10 parts by mass, and further preferably from 3 parts by mass to 8 parts by mass, based on 100 parts by mass of the copolyester.

Preferably, the transesterification catalyst does not contain a hydroxy group. The use of the catalyst that does not contain a hydroxy group can suppress alcoholysis, thereby increasing the gel fraction of the crosslinked polyester composition.

The kneading is carried out using the copolyester in a molten state by heating. By kneading the copolyester in a molten state by heating with the polyfunctional epoxy compound having a plurality of epoxy groups and the transesterification catalyst, the carboxy groups contained in the copolyester react with the epoxy groups contained in the polyfunctional epoxy compound, thereby yielding the crosslinkable polyester composition. When scission of the polyester occurs during the kneading, the carboxy or hydroxy groups generated at both ends of the cleaved polyester chains react with the epoxy groups, resulting in an increase in the molecular weight. The resulting crosslinkable polyester composition is a composition containing a crosslinkable polyester capable of exhibiting bond-exchangeable dynamic covalent bonds in the future, and the composition exhibits excellent processability.

The kneading is preferably carried out, for example, at a temperature equal to or lower than the glass transition temperature (Tg) of the copolyester + 120°C. The kneading carried out within this temperature range can prevent crosslinking of the copolyester that occurs during the kneading. The kneading is more preferably carried out at a temperature equal to or lower than the glass transition temperature (Tg) of the copolyester + 120°C and equal to or lower than 250°C.

The kneading time is not particularly limited, and is preferably, for example, 2 minutes or longer. Uniform kneading can be achieved by kneading for 2 minutes or longer. The kneading time is more preferably 3 minutes or longer. However, employing excessively long kneading times may reduce productivity. Accordingly, the upper limit of the kneading time is preferably, for example, 1 hour or shorter. The kneading time is more preferably 30 minutes or shorter, and further preferably 15 minutes or shorter. Accordingly, the kneading time is preferably from 2 minutes to 1 hour, more preferably from 3 minutes to 30 minutes, and further preferably from 3 minutes to 15 minutes.

The kneading is preferably carried out, for example, in an inert gas atmosphere. As the inert gas, for example, nitrogen gas may be used.

The kneading is preferably carried out under solvent-free conditions. The kneading carried out under solvent-free conditions can eliminate the need to remove a solvent from the crosslinkable polyester composition obtained by kneading (i.e., drying of the crosslinkable polyester composition is unnecessary), thereby enabling short-time production and thus industrial-scale manufacturing.

The crosslinkable polyester composition obtained by kneading preferably has a number-average molecular weight (Mn) of, for example, from 6000 to 50000. When the number-average molecular weight (Mn) of the crosslinkable polyester composition is 6000 or more, heat resistance can be improved. The number-average molecular weight (Mn) is more preferably 6500 or more, and further preferably 7000 or more. However, when the number-average molecular weight (Mn) of the crosslinkable polyester composition is significantly high, fluidity decreases due to increased viscosity, making kneading difficult. Therefore, the number-average molecular weight (Mn) is preferably 50000 or less, more preferably 40000 or less, further preferably 28000 or less, and particularly preferably 25000 or less. Accordingly, the number-average molecular weight (Mn) of the crosslinkable polyester composition is more preferably from 6500 to 40000, further preferably from 7000 to 28000, and particularly preferably from 7000 to 25000.

The crosslinkable polyester composition preferably has a molecular weight distribution of, for example, from 1.5 to 3. The molecular weight distribution can be calculated based on the weight-average molecular weight (Mw) and the number-average molecular weight (Mn) using the following formula:

Molecular weight distribution = Mw / Mn

The molecular weight distribution of the crosslinkable polyester composition is more preferably 1.8 or more. However, if the molecular weight distribution of the crosslinkable polyester composition is significantly high, variation in chain length increases, which may result in variations in the strength of the crosslinkable polyester composition. The molecular weight distribution of the crosslinkable polyester composition is more preferably 2.8 or less. Accordingly, the molecular weight distribution of the crosslinkable polyester composition is more preferably from 1.8 to 2.8.

The method for producing the crosslinkable polyester composition according to the embodiments of the present invention may further include the step of, for example, forming the kneaded mixture into a predetermined form after kneading, such as a film, sheet, granule, flake, rod, or filament or yarn.

The kneading is preferably carried out using, for example, an extrusion molding machine, and more preferably carried out using a twin-screw kneading extruder. When a twin-screw kneading extruder is used, a formed article containing the crosslinkable polyester composition is preferably extruded from the twin-screw kneading extruder in the form of a granule, flake, rod, filament or yarn, sheet, or film. The formed article containing the crosslinkable polyester composition in the form of a sheet or film may be used, for example, as an adhesive sheet or an adhesive film. When used as the adhesive sheet or the adhesive film, the formed article containing the crosslinkable polyester composition in the form of a sheet or a film is sandwiched between the substrates to be bonded (adherends), then a bond exchange reaction is induced upon heating, and the substrates can be bonded.

The material of the substrates (adherends) is not particularly limited, and examples of the material include wood, glass, resin, metal, and composites thereof. The shape of the substrates is not particularly limited, and may be in the form of, for example, a film, sheet, foil, or plate. Examples of the substrates include a resin film, a metal foil, and a metal plate. Examples of the resin film include a polyimide film, a polyester film, and a PET film. Examples of the metal foil include a copper foil, a silver foil, and a gold foil. Examples of the metal plate include an aluminum plate, a stainless steel plate, a steel plate, and an iron plate. The formed article containing the crosslinkable polyester composition may be used as an adhesive for bonding the same or different types of substrates, as described above, such as resin films, metal foils, and a resin film and a metal foil.

The formed article containing the crosslinkable polyester composition according to another embodiment of the present invention is characterized in that the crosslinkable polyester composition contains the copolyester, the polyfunctional epoxy compound having a plurality of epoxy groups, and the transesterification catalyst; the formed article has a gel fraction of less than 30%; and the formed article is in the form of a rod, filament or yarn, granule, or flake. Since the formed article containing the crosslinkable polyester composition has a gel fraction of less than 30%, excellent processability can be achieved.

The formed article containing the crosslinkable polyester composition according to another embodiment of the present invention is characterized in that the crosslinkable polyester composition contains the copolyester, the polyfunctional epoxy compound having a plurality of epoxy groups, and the transesterification catalyst; the formed article has a gel fraction of less than 30%; and the formed article is in the form of a sheet or a film having a thickness of 20 $\mu$m or more. Since the formed article containing the crosslinkable polyester composition has a gel fraction of less than 30%, excellent processability can be achieved. The thickness of the formed article containing the crosslinkable polyester composition may be from 20 $\mu$m to 3 mm, from 0.1 mm to 2 mm, or from 0.5 mm to 1.5 mm. The formed article containing the crosslinkable polyester composition in the form of a sheet or film may be used, for example, as an adhesive sheet or an adhesive film. When used as the adhesive sheet or the adhesive film, the formed article containing the crosslinkable polyester composition in the form of a sheet or a film is sandwiched between the substrates to be bonded (adherends), then crosslinking occurs through an epoxy ring-opening reaction and a bond exchange reaction upon heating, and the substrates can be bonded. As the substrates, those described above may be used.

The formed article containing the crosslinkable polyester composition preferably has a gel fraction of 30% or more by heating at a temperature in the range of from 120°C to 250°C for 3 hours, more preferably 40% or more by heating at a temperature in the range of from 120°C to 250°C for 6 hours, further preferably 50% or more by heating at a temperature in the range of from 120°C to 250°C for 12 hours.

The formed article containing the crosslinkable polyester composition according to the embodiments of the present invention exhibits good processability, and a cured product (crosslinked polyester composition) having a gel fraction of 30% or more can be obtained by heating the formed article containing the crosslinkable polyester composition at a temperature higher than the kneading temperature for producing the crosslinkable polyester composition, specifically, at a temperature in the range of from 120°C (particularly, a temperature higher than 120°C) to 250°C, for 3 hours. By heating the formed article containing the crosslinkable polyester composition, polyester molecules contained in this crosslinkable polyester composition are crosslinked through an epoxy ring-opening reaction and a bond-exchangeable dynamic covalent bonding, and a cured product (crosslinked polyester composition) can be obtained. The crosslinked polyester composition (cured product) obtained by crosslinking the crosslinkable polyester composition undergoes a bond exchange reaction upon further heating, thereby enabling the crosslinked polyester composition to be reformed.

Subsequently, a method for producing the crosslinked polyester composition according to another embodiment of the present invention will be described. The crosslinked polyester composition according to the embodiments of the present invention is a cured product of the above described crosslinkable polyester composition, which can be produced by heating and crosslinking the crosslinkable polyester composition. Accordingly, the method for producing the crosslinked polyester composition is characterized in that the method includes the step of kneading the copolyester in a molten state by heating with the polyfunctional epoxy compound having a plurality of epoxy groups and the transesterification catalyst; and the step of crosslinking the crosslinkable polyester composition obtained through the above-mentioned step by heating.

In the production of the crosslinked polyester composition, the crosslinkable polyester composition is preferably heated at a temperature higher than the kneading temperature for producing the crosslinkable polyester composition, specifically, at a temperature in the range of from 120°C to 250°C. The heating temperature is more preferably 130°C or higher, further preferably 140°C or higher, and more preferably 240°C or lower, further preferably 230°C or lower. Accordingly, the heating temperature is more preferably from 130°C to 240°C, and further preferably from 140°C to 230°C. The heating time is not particularly limited as long as the heating time is sufficient for the crosslinking to proceed. The heating time is, for example, from about 10 minutes to 10 hours, and heating for a period shorter or longer than this range may also be acceptable. The heating time may be 1 hour or longer, or may be from 1 hour to 10 hours.

The crosslinked polyester composition exhibits reformability. Even if the crosslinked polyester composition is deformed into a predetermined shape, the crosslinked polyester composition can undergo a bond exchange reaction upon heating in the deformed state, and the crosslinked polyester composition can be reformed. The predetermined shape is retained even after cooling. The heating temperature may be, for example, in the range of from 120°C to 250°C, from 130°C to 240°C, or from 140°C to 230°C.

Since the crosslinked polyester composition exhibits good moldability and extrudability, the crosslinked polyester composition may be used, for example, as a molding material. The crosslinked polyester composition may also be used, for example, as a material for 3D printing or as a material for forming a network structure. The network structure is formed from linear bodies made of the crosslinked polyester composition, which are fused together at their intersections to form the structure. The shape of the linear bodies is not particularly limited. The interior of each linear body may be either solid or hollow, and the cross-sectional shape of each linear body may be either circular or modified.

The crosslinked polyester composition may be used, for example, as an adhesive sheet or an adhesive film. When used as the adhesive sheet or the adhesive film, the crosslinked polyester composition is sandwiched between substrates to be bonded (adherends), then an epoxy ring-opening reaction and a bond exchange reaction are induced upon heating, and the substrates can be bonded. As the substrates, those described above may be used.

The present application claims the benefit of priority to Japanese Patent Application No. 2023-115347 filed on July 13, 2023. The entire contents of the specification of Japanese Patent Application No. 2023-115347 are incorporated herein by reference.

EXAMPLES

The present invention will now be described in more detail by way of the following Examples. However, the scope of the present invention is not limited to the following Examples, and various modifications may be made within the scope consistent with the spirit of the present invention as described above and below. These modifications are all encompassed within the technical scope of the present invention. Hereinafter, "part(s)" refers to "part(s) by mass."

The crosslinkable polyester composition was produced by kneading the copolyester in a molten state by heating with the polyfunctional epoxy compound having a plurality of epoxy groups and the transesterification catalyst.

As the copolyester, the copolyester A1 (manufactured by Toyobo Co., Ltd.) that had been sufficiently dried in advance, or the copolyester A2 (manufactured by Toyobo Co., Ltd.) that had been sufficiently dried in advance, was used. The copolyester A1 and the copolyester A2 were prepared according to the following procedure.

(Copolyester A1)

In a reaction vessel equipped with a stirrer, a thermometer, and a distillation condenser, 50 mol of terephthalic acid, 20 mol of isophthalic acid, 30 mol of sebacic acid, 58 mol of ethylene glycol, 42 mol of 2,2-dimethyl-1,3-propanediol, and 0.2 mol of tetrabutyl titanate were charged. The mixture was gradually heated to 250°C, and an esterification reaction was carried out while removing the generated water from the system. After completion of the esterification reaction, the pressure was gradually reduced to 10 mmHg while increasing the temperature to 250°C to carry out an initial polymerization under reduced pressure, followed by a post-polymerization at a pressure of 1 mmHg or less until a predetermined torque was reached, and the copolyester A1 was obtained. The composition of the copolyester A1 is shown in Table 1 below.

(Copolyester A2)

In a reaction vessel equipped with a stirrer, a thermometer, and a distillation condenser, 50 mol of terephthalic acid, 50 mol of isophthalic acid, 50 mol of ethylene glycol, 50 mol of 2,2-dimethyl-1,3-propanediol, and 0.2 mol of tetrabutyl titanate were charged. The mixture was gradually heated to 250°C, and an esterification reaction was carried out while removing the generated water from the system. After completion of the esterification reaction, the pressure was gradually reduced to 10 mmHg while increasing the temperature to 250°C to carry out an initial polymerization under reduced pressure, followed by a post-polymerization at a pressure of 1 mmHg or less until a predetermined torque was reached, and the copolyester A2 was obtained. The composition of the copolyester A2 is shown in Table 1 below.

Both the copolyester A1 and the copolyester A2 are straight-chain amorphous polyesters that do not have crosslinkable functional groups on their side chains.

Subsequently, the acid value (mg KOH/g) and the glass transition temperature (°C) of each of the copolyester A1 and the copolyester A2 were measured in accordance with the following procedure, and the results are shown in Table 1.

(Acid Value)

In 20 ml of chloroform was dissolved the copolyester weighing 0.2 g. Phenolphthalein as an indicator was then added to the solution, and the resulting solution was titrated with a 0.1 N potassium hydroxide ethanol solution. The acid value (mg KOH/g) was calculated by converting the amount of potassium hydroxide in mg (mg KOH) consumed for neutralization, which was determined from the titration volume, into the amount per gram of the copolyester.

(Glass Transition Temperature)

The glass transition temperature (Tg) was determined by measuring the heat flow using DSC7020 (manufactured by Hitachi High-Tech Corporation) in a nitrogen gas atmosphere over a temperature range of from -50°C to 200°C at a temperature change rate of 10°C/min.

[Table 1]

| | | | A1 | A2 |
|---|---|---|---|---|
| **Composition (mol%)** | **Acid Component** | **Terephthalic Acid** | 50 | 50 |
| | | **Isophthalic Acid** | 20 | 50 |
| | | **Sebacic Acid** | 30 | - |
| | **Alcohol Component** | **Ethylene Glycol** | 58 | 50 |
| | | **2,2-Dimethyl-1,3-propanediol** | 42 | 50 |
| **Physical Properties** | **Acid Value (mg KOH/g)** | | 1.9 | 0.8 |
| | **Glass Transition Temperature (°C)** | | 7 | 67 |

The number-average molecular weight (Mn) of the copolyester A1 and the copolyester A2 were measured in accordance with the following procedure.

(Number-Average Molecular Weight (Mn))

The copolyester was dissolved in dimethylformamide (DMF) to a concentration of approximately 0.5% by mass, and obtained solution was filtered through a polytetrafluoroethylene membrane filter with a pore size of 0.5 $\mu$m to prepare a sample for measurement. The number-average molecular weight (Mn) was then measured by gel permeation chromatography, using DMF containing LiBr (0.05% by mass) as a mobile phase and a differential refractometer as a detector. The flow rate was set at 0.5 mL/min, and the column temperature was set at 40°C. The columns used were KF-803, KF-804L, and KF-805L, all manufactured by Showa Denko K.K. Monodisperse polymethyl methacrylate was used as a standard substance (molecular weight standard). Low-molecular-weight compounds (e.g., oligomers) with a number-average molecular weight (Mn) less than 1000 were excluded and not counted.

The copolyester A1 had a number-average molecular weight (Mn) of 27267 and a weight-average molecular weight (Mw) of 50559, while the copolyester A2 had a number-average molecular weight (Mn) of 23604 and a weight-average molecular weight (Mw) of 44018.

As the polyfunctional epoxy compound having a plurality of epoxy groups, 4,4'-methylenebis(N,N-diglycidylaniline) or bisphenol A diglycidyl ether was used. Among them, 4,4'-methylenebis(N,N-diglycidylaniline) is a tetrafunctional epoxy compound having four epoxy groups, while bisphenol A diglycidyl ether (DGEBA) is a difunctional epoxy compound having two epoxy groups.

As the transesterification catalyst, 1,8-Diazabicyclo[5.4.0]-7-undecene (DBU), 1,5,7-Triazabicyclo[4.4.0]dec-5-ene (TBD), or zinc acetate was used. Each of 1,8-Diazabicyclo[5.4.0]-7-undecene, 1,5,7-Triazabicyclo[4.4.0]dec-5-ene, and zinc acetate is a catalyst that does not contain a hydroxy group.

(Example 1)

A crosslinkable polyester composition was produced by kneading 100 parts of the copolyester A1 in a molten state by heating with 10 parts of 4,4'-methylenebis(N,N-diglycidylaniline) and 2.5 parts of DBU. The kneading was carried out using a twin-screw kneading extruder manufactured by Thermo Fisher Scientific K.K. (Haake (registered trademark) MiniLab) under solvent-free conditions. The kneading was carried out under conditions of a temperature of 120°C and a rotation speed of 50 rpm for 5 minutes under a nitrogen gas atmosphere. The resulting crosslinkable polyester composition is hereinafter referred to as a crosslinkable polyester composition 1.

(Example 2)

A crosslinkable polyester composition was produced under the same conditions as in Example 1, except that the amount of 4,4'-methylenebis(N,N-diglycidylaniline) was changed to 20 parts. The resulting crosslinkable polyester composition is hereinafter referred to as a crosslinkable polyester composition 2.

(Comparative Example 1)

A crosslinkable polyester composition was produced under the same conditions as in Example 1, except that 4,4'-methylenebis(N,N-diglycidylaniline) was not used. The resulting crosslinkable polyester composition is hereinafter referred to as a comparative crosslinkable polyester composition 1.

(Comparative Example 2)

A crosslinkable polyester composition was produced under the same conditions as in Example 1, except that 4,4'-methylenebis(N,N-diglycidylaniline) was not used, and the amount of DBU was changed to 5 parts. The resulting crosslinkable polyester composition is hereinafter referred to as a comparative crosslinkable polyester composition 2.

(Comparative Example 3)

A crosslinkable polyester composition was produced under the same conditions as in Example 1, except that DBU was not used. The resulting crosslinkable polyester composition is hereinafter referred to as a comparative crosslinkable polyester composition 3.

(Example 3)

A crosslinkable polyester composition was produced under the same conditions as in Example 1, except that 100 parts of the copolyester A2 was used in place of 100 parts of the copolyester A1. The resulting crosslinkable polyester composition is hereinafter referred to as a crosslinkable polyester composition 3.

(Example 4)

A crosslinkable polyester composition was produced under the same conditions as in Example 1, except that 2.5 parts of zinc acetate was used in place of 2.5 parts of DBU. The resulting crosslinkable polyester composition is hereinafter referred to as a crosslinkable polyester composition 4.

(Comparative Example 4)

A crosslinkable polyester composition was produced under the same conditions as in Example 1, except that 100 parts of polybutylene terephthalate (PBT) was used in place of 100 parts of the copolyester A1, and that the kneading temperature was changed to 270°C. The polybutylene terephthalate is a crystalline polyester. The resulting crosslinkable polyester composition is hereinafter referred to as a comparative crosslinkable polyester composition 4.

(Comparative Example 5)

A crosslinkable polyester composition was produced under the same conditions as in Example 1, except that 100 parts of polybutylene terephthalate (PBT) was used in place of 100 parts of the copolyester A1, 1 part of DGEBA was used in place of 10 parts of 4,4'-methylenebis(N,N-diglycidylaniline), and the kneading temperature was changed to 270°C. The resulting crosslinkable polyester composition is hereinafter referred to as a comparative crosslinkable polyester composition 5.

(Example 5)

A crosslinkable polyester composition was produced under the same conditions as in Example 1, except that 10 parts of DGEBA was used in place of 10 parts of 4,4'-methylenebis(N,N-diglycidylaniline). The resulting crosslinkable polyester composition is hereinafter referred to as a crosslinkable polyester composition 5.

The compositions (parts) of the crosslinkable polyester compositions 1 to 5 obtained in Examples 1 to 5 and the comparative crosslinkable polyester compositions 1 to 5 obtained in Comparative Examples 1 to 5 are shown in Table 2 below.

[Table 2-1]

| | | Example 1 | Example 2 | Comparative Example 1 | Comparative Example 2 | Comparative Example 3 |
|---|---|---|---|---|---|---|
| Copolyester | Copolyester A1 | 100 | 100 | 100 | 100 | 100 |
| | Copolyester A2 | - | - | - | - | - |
| PBT | | - | - | - | - | - |
| Polyfunctional Epoxy Compound | 4,4'-Methylene-bis(N,N-diglycidy-laniline) | 10 | 20 | - | - | 10 |
| | DGEBA | - | - | - | - | - |
| Transesterification Catalyst | DBU | 2.5 | 2.5 | 2.5 | 5 | - |
| | TBD | - | - | - | - | - |
| | Zinc Acetate | - | - | - | - | - |
| Kneading | Temperature (°C) | 120 | 120 | 120 | 120 | 120 |
| | Rotation Speed (rpm) | 50 | 50 | 50 | 50 | 50 |
| | Time (minutes) | 5 | 5 | 5 | 5 | 5 |
| Molecular Weight | Number-Average Molecular Weight (Mn) | 13400 | 18200 | 19000 | 11000 | 34000 |
| | Molecular Weight Distribution (Mw/Mn) | 2.33 | 2.04 | 1.61 | 1.5 | 1.66 |
| Gel Fraction | 0 h | 0% | 0% | 0% | 0% | 0% |
| | 180°C × 3 h | 85% | 30% | 0% | 0% | 0% |
| | 180°C × 6 h | 90% | 40% | 0% | 0% | 0% |
| | 180°C × 12 h | 80% | 50% | 0% | 0% | 0% |
| | 180°C × 24 h | 80% | 55% | 0% | 0% | 0% |

[Table 2-2]

| | | Example 3 | Example 4 | Comparative Example 4 | Comparative Example 5 | Example 5 |
|---|---|---|---|---|---|---|
| Copolyester | Copolyester A1 | - | 100 | - | - | 100 |
| | Copolyester A2 | 100 | - | - | - | - |
| PBT | | - | - | 100 | 100 | - |
| Polyfunctional Epoxy Compound | 4,4'-Methylene-bis(N,N-diglycidy-laniline) | 10 | 10 | 10 | - | - |
| | DGEBA | - | - | - | 1 | 10 |
| Transesterification Catalyst | DBU | 2.5 | - | 2.5 | 2.5 | 2.5 |
| | TBD | - | - | - | - | - |
| | Zinc Acetate | - | 2.5 | - | - | - |
| Kneading | Temperature (°C) | 120 | 120 | 270 | 270 | 120 |
| | Rotation Speed (rpm) | 50 | 50 | 50 | 50 | 50 |
| | Time (minutes) | 5 | 5 | 5 | 5 | 5 |
| Molecular Weight | Number-Average Molecular Weight (Mn) | - | - | - | - | - |
| | Molecular Weight Distribution (Mw/Mn) | - | - | - | - | - |
| Gel Fraction | 0 h | 0% | 0% | 33.8% | 0% | 0% |
| | 180°C × 3 h | 82% | 46% | 75% | 0% | 67% |
| | 180°C × 6 h | 90% | 83% | 48% | 0% | 71% |
| | 180°C x 12 h | 93% | 85% | 57% | 0% | 69% |
| | 180°C × 24 h | - | - | - | - | - |

Subsequently, GPC chromatograms were measured for the crosslinkable polyester compositions and the comparative crosslinkable polyester compositions according to the following procedure, and the number-average molecular weight (Mn) and the molecular weight distribution (Mw/Mn) were determined.

[Number-Average Molecular Weight (Mn) and Molecular Weight Distribution (Mw/Mn)]

The GPC chromatograms of the crosslinkable polyester compositions were measured using size exclusion chromatography. The crosslinkable polyester composition was dissolved in dimethylformamide to a concentration of approximately 0.2% by mass to prepare a sample for measurement. The GPC chromatogram was measured using dimethylformamide containing 0.05% by mass of lithium bromide as a mobile phase, a RID-20A detector (manufactured by Shimadzu Corporation), and an LC-20AD pump system (manufactured by Shimadzu Corporation), and the number-average molecular weight (Mn) and the weight-average molecular weight (Mw) were determined. The flow rate was set at 1.0 mL/min, and the column temperature was set at 40°C. The columns used were Shodex K-803, K-804, and K-805. Poly(methyl methacrylate) was used as a standard material (molecular weight standard). The molecular weight distribution (Mw/Mn) was calculated based on the number-average molecular weight (Mn) and the weight-average molecular weight (Mw). The measurement results are shown in Table 2. In Table 2, "-" indicates that the GPC chromatogram was not measured.

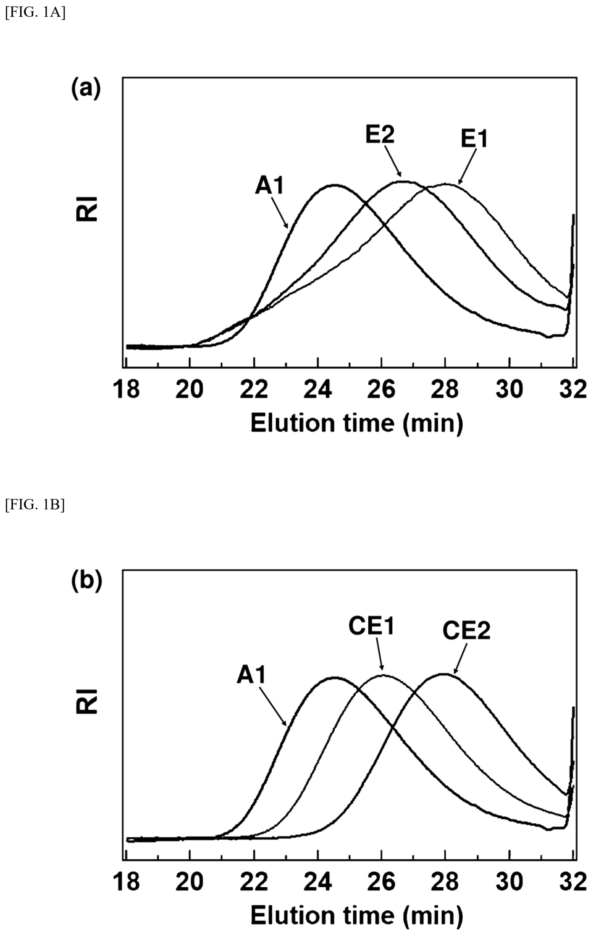

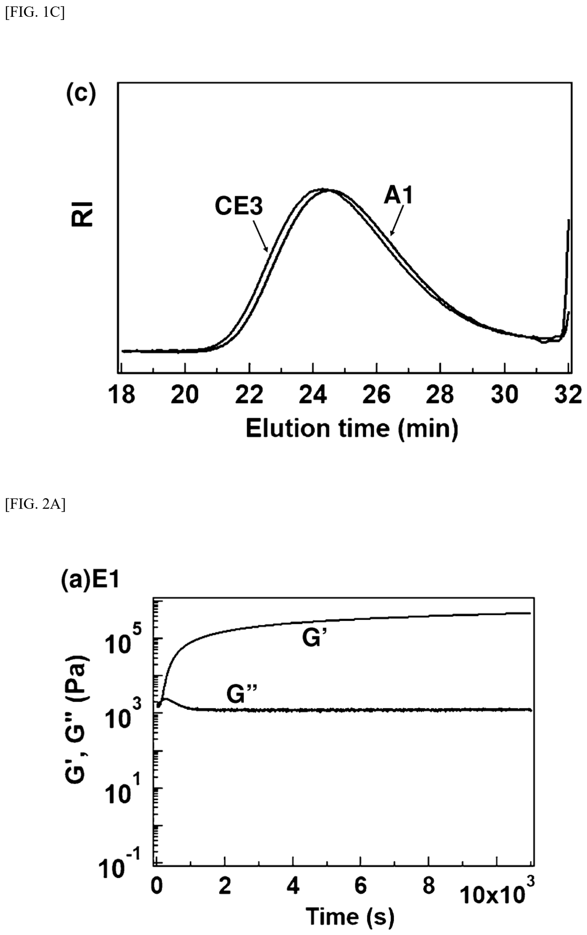

The GPC chromatograms measured for the crosslinkable polyester compositions 1 and 2 are shown in FIG. 1A. In FIG. 1A, the curve E1 represents the result for the crosslinkable polyester composition 1, and the curve E2 represents the result for the crosslinkable polyester composition 2. The GPC chromatograms measured for the comparative crosslinkable polyester compositions 1 and 2 are shown in FIG. 1B. In FIG. 1B, the curve CE1 represents the result for the comparative crosslinkable polyester composition 1, and the curve CE2 represents the result for the comparative crosslinkable polyester composition 2. The GPC chromatogram measured for the comparative crosslinkable polyester composition 3 is shown in FIG. 1C. In FIG. 1C, the curve CE3 represents the result for the comparative crosslinkable polyester composition 3. In each of the FIGs. 1A to 1C, the GPC chromatogram measured for the copolyester A1 is also shown. In FIGs. 1A to 1C, the curve A1 represents the result for the copolyester A1. In FIGs. 1A to 1C, the horizontal axis indicates the elution time (minutes), and the vertical axis indicates the differential refractive index.

According to the results of Examples 1 and 2 shown in FIG. 1A, the crosslinkable polyester compositions 1 and 2 exhibited longer elution times compared to the copolyester A1, thereby indicating a reduction in molecular weight. In addition, since the elution curves of the crosslinkable polyester compositions 1 and 2 also appeared on the shorter elution time side compared to the copolyester A1, it is inferred that components with slightly increased molecular weights were also generated by the kneading. These results indicate the presence of the 4,4'-methylenebis(N,N-diglycidylaniline) component that reacted with decomposed polyester. According to the results of Comparative Examples 1 and 2 shown in FIG. 1B, the comparative crosslinkable polyester compositions 1 and 2 exhibited longer elution times than the copolyester A1, thereby indicating a reduction in molecular weight. These results clearly demonstrate that DBU induced the scission of the polyester main chains during kneading. According to the result of Comparative Example 3 shown in FIG. 1C, the comparative crosslinkable polyester composition 3 revealed no significant change in molecular characteristics compared with the copolyester A1. This result indicates that 4,4'-methylenebis(N,N-diglycidylaniline) did not decompose during the kneading, and that no reaction with the epoxy groups occurred.

Subsequently, the adhesion of the crosslinkable polyester compositions 3 and 4 was evaluated. Each of the crosslinkable polyester compositions 3 and 4 was sandwiched between Teflon (registered trademark) sheets, and pressed at 180°C under 2 MPa for 2 minutes using a hot press machine to form a sheet. Subsequently, for each of the crosslinkable polyester compositions 3 and 4, two pieces of aluminum were prepared as substrates. Each crosslinkable polyester composition was then sandwiched between two aluminum pieces, pressed at 180°C under 2 MPa for 5 minutes using a hot press machine, and heated at 180°C for 3 hours in an oven to obtain a "test piece a". Similarly, two polyethylene terephthalate films (PET films) were prepared as substrates for each of the crosslinkable polyester compositions 3 and 4. Each crosslinkable polyester composition was sandwiched between two PET films, pressed at 180°C under 2 MPa for 5 minutes using a hot press machine, and heated at 180°C for 3 hours in an oven to obtain a "test piece b". The heated "test piece a" and "test piece b" were allowed to cool to room temperature, and the adhesion between the substrates was evaluated by touching by hands.

As a result of the evaluation, bonding between the aluminum pieces and bonding between the PET films were confirmed when the crosslinkable polyester composition 3 was used. Similarly, bonding between the aluminum pieces and bonding between the PET films were confirmed when the crosslinkable polyester composition 4 was used.

Subsequently, the crosslinking behavior was investigated by measuring the viscoelastic changes upon heating of the crosslinkable polyester composition or the comparative crosslinkable polyester composition. Specifically, the crosslinkable polyester composition or the comparative crosslinkable polyester composition was heated, and the time-resolved viscoelasticity under isothermal conditions was measured according to the following procedure.

[Time-Resolved Viscoelastic Measurement under Isothermal Conditions]

The time-resolved viscoelasticity under isothermal conditions was measured by heating the crosslinkable polyester composition or the comparative crosslinkable polyester composition at 180°C for 3 hours. In the time-resolved viscoelastic measurement under isothermal conditions, changes in the storage modulus (G') and the loss modulus (G") over the heating time were measured. A rheometer MCR102 (manufactured by Anton Paar GmbH) was used as a measurement device. An aluminum disposable jig with a diameter of 8 mm was used. The test piece had a diameter of 8 mm and a thickness of approximately 0.5 mm. The measurement was carried out under a nitrogen gas atmosphere.

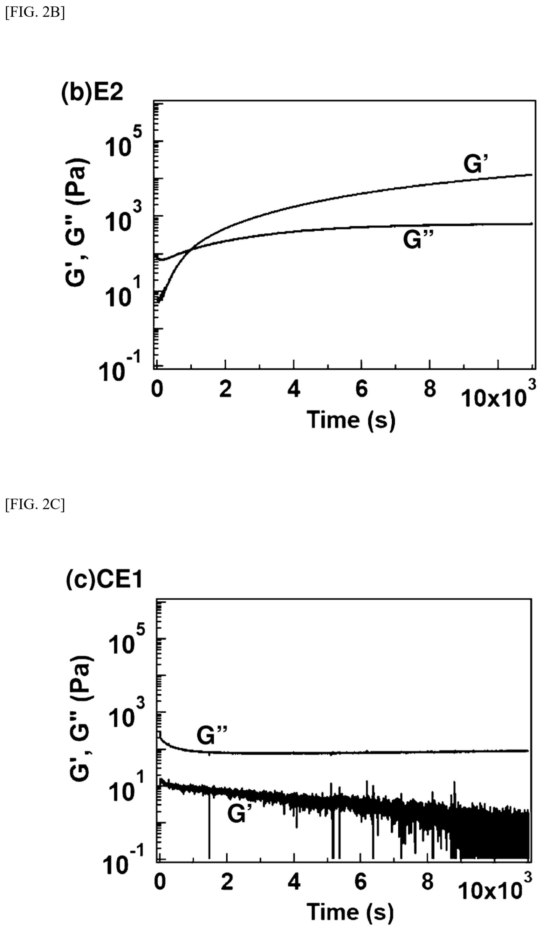

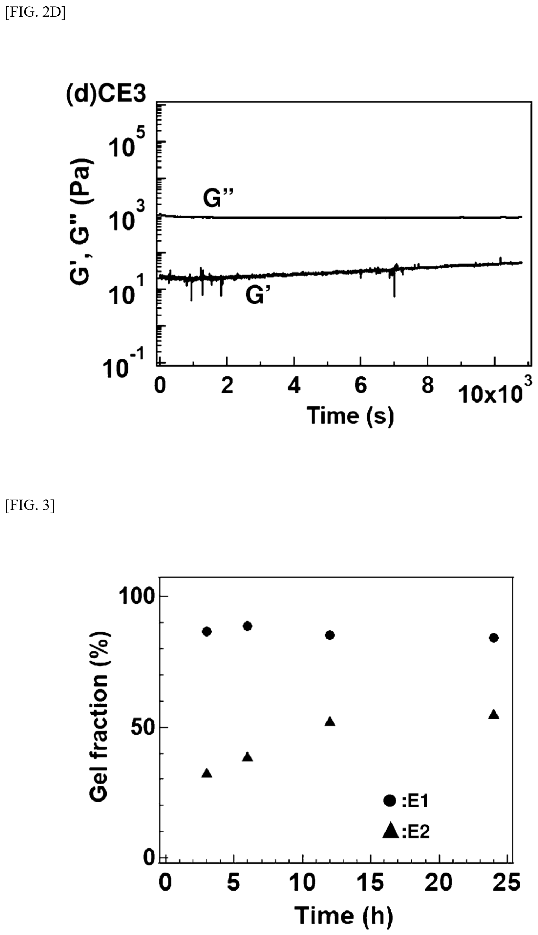

The spectra obtained by measuring the time-resolved viscoelasticity under isothermal conditions of the crosslinkable polyester composition 1 are shown in FIG. 2A. The spectra obtained by measuring the time-resolved viscoelasticity under isothermal conditions of the crosslinkable polyester composition 2 are shown in FIG. 2B. The spectra obtained by measuring the time-resolved viscoelasticity under isothermal conditions of the comparative crosslinkable polyester composition 1 are shown in FIG. 2C. The spectra obtained by measuring the time-resolved viscoelasticity under isothermal conditions of the comparative crosslinkable polyester composition 3 are shown in FIG. 2D. In FIGs. 2A to 2D, the horizontal axis represents time (seconds), and the vertical axis represents the storage modulus (G') or the loss modulus (G").

The measurement carried out under constant temperature and frequency conditions enables the progress of the crosslinking reaction to be tracked during heating, based on the storage modulus (G') and the loss modulus (G"). At a temperature sufficiently higher than the glass transition temperature of the crosslinkable polyester composition, G" > G' is observed when the degree of crosslinking is insufficient. However, as the crosslinking progresses upon heating, G' increases, and eventually reaches the point where G' = G" after a certain period of time. This point in time at which G' = G" can be approximately defined as a gelation time, thereby allowing the progress of the crosslinking to be evaluated on a time scale under given temperature conditions. As the heating time further progresses, G" < G' is observed. In this region, the crosslinking is considered to have sufficiently progressed.

As is apparent from FIG. 2A, G' of the crosslinkable polyester composition 1 increased significantly over time and reached the gel point at which G' = G" is observed approximately 100 seconds after the start of the heating. This result indicates that the chain scission of the copolyester A1 and its reaction with 4,4'-methylenebis(N,N-diglycidylaniline) proceeded, leading to the formation of a network structure. In this system, hydroxy groups and carboxylic acid groups generated by the chain scission react with 4,4'-methylenebis(N,N-diglycidylaniline), and an epoxy ring-opening reaction is induced. Furthermore, the hydroxy groups formed through this epoxy ring-opening reaction then participate in the bond exchange reaction with the chains of the copolyester A1, resulting in the growth of a network structure.

As is apparent from FIG. 2B, G' of the crosslinkable polyester composition 2 increased significantly over time and reached the gel point at which G' = G" is observed approximately 1000 seconds after the start of the heating. This result indicates that the chain scission of the copolyester A1 and its reaction with 4,4'-methylenebis(N,N-diglycidylaniline) proceeded, leading to the formation of a network structure. In this system, hydroxy groups and carboxylic acid groups generated by the chain scission react with 4,4'-methylenebis(N,N-diglycidylaniline), and an epoxy ring-opening reaction is induced. Furthermore, the hydroxy groups formed through this epoxy ring-opening reaction then participate in the bond exchange reaction with the chains of the copolyester A1, resulting in the growth of a network structure.

The results shown in FIGs. 2A and 2B indicate that the amount of 4,4'-methylenebis(N,N-diglycidylaniline) affects the gelation time. It is considered that the gelation proceeds in a short time when the amount of 4,4'-methylenebis(N,N-diglycidylaniline) is set to 10 parts. At the point where the test pieces had been heated at 180°C for 3 hours, the storage modulus (G') value of the crosslinkable polyester composition 1 was 0.81 MPa, whereas the storage modulus (G') value of the crosslinkable polyester composition 2 was 0.013 MPa.

As is apparent from these results, the amount of 4,4'-methylenebis(N,N-diglycidylaniline) affects the crosslinking density of the crosslinked polyester composition. It is considered that the crosslinking density is increased by setting the amount of 4,4'-methylenebis(N,N-diglycidylaniline) to 10 parts.

As shown in FIG. 2C, the storage modulus (G') of the comparative crosslinkable polyester composition 1 decreased over time, while the loss modulus (G") remained nearly constant even as time progressed. The comparative crosslinkable polyester composition 1 is an exemplary formulation that does not contain a polyfunctional epoxy compound having a plurality of epoxy groups, and the result indicates that the polyester was gradually decomposed during heating due to the effect of DBU.

As shown in FIG. 2D, the storage modulus (G') of the comparative crosslinkable polyester composition 3 increased over time, while the loss modulus (G") remained nearly constant even as time progressed. The comparative crosslinkable polyester composition 3 is an exemplary formulation that does not contain a transesterification catalyst, and it was found that the molecular weight of the polyester gradually increased during heating due to the reaction between the copolyester A1 and 4,4'-methylenebis(N,N-diglycidylaniline).

As is apparent in each of the FIGs. 2C and 2D, no gelation point at which G' = G" was observed, thereby indicating that the crosslinking reaction did not proceed even by heating at 180°C.

Subsequently, the crosslinkable polyester composition or the comparative crosslinkable polyester composition was heated, and the gel fraction of the obtained sample (crosslinked polyester composition) was measured.

[Measurement of Gel Fraction]

The crosslinkable polyester compositions 1 and 2 were heated at 180°C to prepare samples (crosslinked polyester compositions). The heating time was set to 3, 6, 12, or 24 hours. The obtained samples were then immersed in a solvent (tetrahydrofuran) for 24 hours, followed by solvent replacement. This immersion and the replacement procedure was repeated a total of three times. After completing the third cycle, the samples were removed. The samples were then vacuum-dried, and their dry weights ($m_d$) were measured. The gel fraction ($f_{gel}$) was calculated according to the following formula, based on the comparison between the dry weight ($m_d$) and the initial weight ($m_i$) before heating:

$$f_{gel} (\%) = m_d/m_i \times 100$$

Subsequently, the crosslinkable polyester compositions 3 to 5 and the comparative crosslinkable polyester compositions 4 and 5 were heated at 180°C, and the gel fractions of the obtained samples (crosslinked polyester compositions) were calculated. The heating time was set to 3, 6, or 12 hours. The samples of the comparative crosslinkable polyester compositions 4 and 5 were prepared under the same conditions as those described above, except that hexafluoroisopropanol (HFIP), in place of tetrahydrofuran, was used as the solvent for immersing the samples obtained by heating, and their gel fractions were calculated.

The calculated gel fractions are shown in Table 2. The measurement results of gel fractions of the crosslinkable polyester compositions prior to heating are also shown in the column labeled "0 hours of heating time" in Table 2. In the examples where DBU was used as a transesterification catalyst, the weight of DBU was excluded from the initial weight ($m_i$), since it was a component that leached out of the system.

The gel fractions calculated using the samples 1 and 2 (crosslinked polyester compositions 1 and 2), prepared from the crosslinkable polyester compositions 1 and 2, respectively, are shown in FIG. 3. In FIG. 3, the horizontal axis represents the heating time (hours), and the vertical axis represents the gel fraction (%). In FIG. 3, "•" (solid circle) indicates the measurement result for the sample 1 obtained by heating the crosslinkable polyester composition 1, while " ▲" (solid triangle) indicates the measurement result for the sample 2 obtained by heating the crosslinkable polyester composition 2.

As is apparent from FIG. 3, the crosslinked polyester composition 1 that exhibited a high gel fraction of from 85% to 90% was obtained by heating the crosslinkable polyester composition 1 at 180°C for 3 hours. However, extending the heating time beyond 3 hours did not result in a significantly change in the gel fraction of the resulting crosslinked polyester composition 1. The crosslinked polyester composition 2 that exhibited a gel fraction of about 30% was obtained by heating the crosslinkable polyester composition 2 at 180°C for 3 hours. The gel fraction of the crosslinked polyester composition 2 remained at about 30%, indicating that the crosslinking progressed more slowly than in Example 1. These results are consistent with the results of the viscoelastic measurement described above. Although the gel fraction of the crosslinked polyester composition 2 was increased by extending the heating time of the crosslinkable polyester composition 2, the gel fraction of the crosslinked polyester composition 2 remained at about 55% even by heating for 24 hours. These results indicate that the amount of 4,4'-methylenebis(N,N-diglycidylaniline) is a critical factor in the progression of the crosslinking in the crosslinkable polyester composition and has an influence on the gel fraction of the resulting crosslinked polyester composition. It was found that setting the amount of 4,4'-methylenebis(N,N-diglycidylaniline) to 10 parts increased the gel fraction of the crosslinked polyester composition.

Subsequently, samples (crosslinked polyester compositions) were prepared from the crosslinkable polyester composition 1 under the same conditions as described above, except that the heating temperature was set to 120°C, 140°C, or 160°C instead of 180°C, while the heating time was maintained at 3 hours, and the gel fraction was measured. The measured gel fraction is shown in Table 3.

[Table 3]

| Heating Temperature | Gel Fraction |
|---|---|
| 120°C | 59% |
| 140°C | 73% |
| 160°C | 86% |

As is apparent from Tables 2 and 3, the crosslinkable polyester composition 1 obtained in Example 1 yielded a crosslinked polyester composition having a gel fraction of from 85% to 90% by heating at 180°C for 3 hours. However, the gel fraction of the crosslinked polyester composition decreased when the heating temperature was lowered.

Subsequently, the crosslinkable polyester composition 1 was crosslinked by heating, and the bond exchange properties of the resulting sample (crosslinked polyester composition) were evaluated. The bond exchange properties were evaluated based on the results of the stress relaxation measurement and the reformability test.

[Stress Relaxation Measurement]

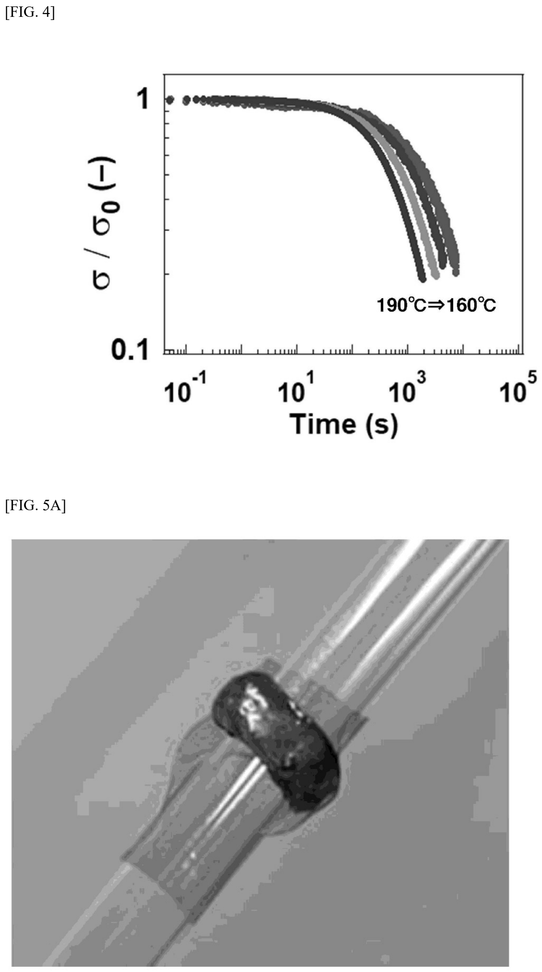

The stress relaxation was measured using a rheometer MCR102 (manufactured by Anton Paar GmbH) as a measurement device. An aluminum disposable jig with a diameter of 8 mm was used. Test pieces were prepared from a sample (crosslinked polyester composition) obtained by heating the crosslinkable polyester composition 1 at 180°C for 3 hours. Each test piece had a diameter of 8 mm and a thickness of approximately 0.5 mm. The measurement temperature was 170°C, 180°C, 190°C, or 200°C. The measurement was carried out under a nitrogen gas atmosphere. The measured stress relaxation spectrum is shown in FIG. 4. In FIG. 4, the horizontal axis represents time (seconds), and the vertical axis represents the stress ($\sigma/\sigma_0$) normalized by an initial stress ($\sigma_0$). The curves shown in FIG. 4 represent the results measured at 190°C, 180°C, 170°C, and 160°C in order from left.

As is apparent from FIG. 4, significant stress relaxation was observed. This result confirmed that the bond exchange had progressed through the bond exchange reaction under high-temperature conditions.

[Reformability Test]

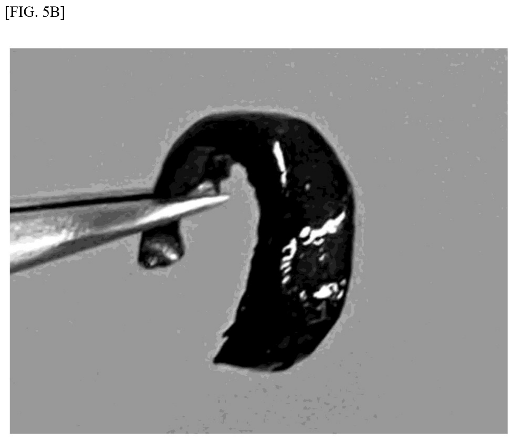

In the reformability test, a planar test piece in the form of a strip (film thickness: 1 mm) was first prepared by cutting the sample (crosslinked polyester composition) obtained by heating the crosslinkable polyester composition 1 at 180°C for 3 hours, and the test piece was wound around a glass tube as shown in FIG. 5A. Both ends of the test piece were then fixed with tape to a spatula. The test piece fixed to the spatula was then heated in an oven at 180°C for 1 hour, followed by cooling to room temperature after the 1-hour heating. The tape was then removed, and the test piece was found to be fixed in a curved shape, as shown in FIG. 5B. This test piece fixed in a curved shape did not return to its original flat shape even by warming with a dryer. It is considered that the sample was reformed because bond exchange was activated at a high temperature of 180°C, which led to a loss of elasticity. Upon cooling, the new network structure was fixed.

Based on these results, it was confirmed that heating the samples (crosslinked polyester compositions) at 180°C led to both the formation of the crosslinked structure and the introduction of bond exchange properties, thereby achieving material transformation of the crosslinkable polyester compositions.

## Claims

1. A method for producing a crosslinkable polyester composition, comprising the step of kneading a copolyester in a molten state by heating with a polyfunctional epoxy compound having a plurality of epoxy groups and a transesterification catalyst.

2. The method for producing the crosslinkable polyester composition according to claim 1, further comprising the step of forming a kneaded mixture into a predetermined form after the kneading.

3. The method for producing the crosslinkable polyester composition according to claim 1, wherein the copolyester is an amorphous polyester.

4. The method for producing the crosslinkable polyester composition according to claim 1, wherein the copolyester comprises:
   a first unit containing ethylene terephthalate or butylene terephthalate; and
   further comprises:

   an acid component comprising at least one selected from the group consisting of the following components, and/or
   an alcohol component comprising at least one selected from the group consisting of the following components:

   acid components: terephthalic acid, isophthalic acid, and sebacic acid, and
   alcohol components: ethylene glycol, 2,2-dimethyl-1,3-propanediol, and 1,4-butanediol.

5. The method for producing the crosslinkable polyester composition according to claim 1, wherein the transesterification catalyst does not contain a hydroxy group.

6. The method for producing the crosslinkable polyester composition according to claim 1, wherein the kneading is conducted at a temperature equal to or lower than a glass transition temperature (Tg) of the copolyester + 120°C.

7. The method for producing the crosslinkable polyester composition according to claim 1, wherein the kneading is conducted under solvent-free conditions.

8. The method for producing the crosslinkable polyester composition according to claim 1, wherein the kneading is conducted using a twin-screw kneading extruder.

9. The method for producing the crosslinkable polyester composition according to claim 8, wherein the twin-screw kneading extruder extrudes a formed article containing the crosslinkable polyester composition in the form of a sheet or a film.

10. A method for producing a crosslinked polyester composition, comprising:

    the step of producing the crosslinkable polyester composition by the method according to claim 1; and
    the subsequent step of crosslinking the crosslinkable polyester composition by heating.

11. The method for producing the crosslinked polyester composition according to claim 10,

wherein the crosslinkable polyester composition is crosslinked by heating at a temperature higher than a temperature of the kneading.

12. The method for producing the crosslinked polyester composition according to claim 10,
wherein the crosslinkable polyester composition is crosslinked by heating at a temperature in a range of from 120°C to 250°C, for 1 hour or longer.

13. A formed article comprising a crosslinkable polyester composition,

   wherein the crosslinkable polyester composition comprises:

      a copolyester,
      a polyfunctional epoxy compound having a plurality of epoxy groups; and
      a transesterification catalyst,

   wherein the formed article has a gel fraction of less than 30%, and
   wherein the formed article is in the form of a rod, a filament or a yarn, a granule, or a flake.

14. A formed article comprising a crosslinkable polyester composition,

   wherein the crosslinkable polyester composition comprises:

      a copolyester,
      a polyfunctional epoxy compound having a plurality of epoxy groups; and
      a transesterification catalyst,

   wherein the formed article has a gel fraction of less than 30%, and
   wherein the formed article is in the form of a sheet or a film having a thickness of 20 $\mu$m or more.

15. The formed article comprising the crosslinkable polyester composition according to claim 13 or 14,
wherein the formed article has a gel fraction of 30% or more by heating at a temperature in a range of from 120°C to 250°C for 3 hours.

[FIG. 1A]

(a)

[FIG. 1B]

(b)

[FIG. 1C]

[FIG. 2A]

[FIG. 2B]

[FIG. 2C]

[FIG. 2D]

(d)CE3

[FIG. 3]

[FIG. 4]

190°C⇒160°C

[FIG. 5A]

[FIG. 5B]

## INTERNATIONAL SEARCH REPORT

| International application No. |
| --- |
| **PCT/JP2024/023273** |

| | |
| --- | --- |
| **A. CLASSIFICATION OF SUBJECT MATTER** | |

*C08G 63/91*(2006.01)i; *C08J 5/18*(2006.01)i
FI:   C08G63/91; C08J5/18 CFD

According to International Patent Classification (IPC) or to both national classification and IPC

**B. FIELDS SEARCHED**

Minimum documentation searched (classification system followed by classification symbols)

C08G63/91; C08J5/18

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | WO 2020/045439 A1 (NAGOYA INSTITUTE OF TECHNOLOGY) 05 March 2020 (2020-03-05)<br>claims, examples | 1-15 |
| A | WO 2023/063386 A1 (TOYOBO CO., LTD.) 20 April 2023 (2023-04-20)<br>claims, examples | 1-15 |
| A | WO 2023/017734 A1 (NAGOYA INSTITUTE OF TECHNOLOGY) 16 February 2023 (2023-02-16)<br>claims, examples | 1-15 |
| A | WO 2022/239439 A1 (NAGOYA INSTITUTE OF TECHNOLOGY) 17 November 2022 (2022-11-17)<br>claims, examples | 1-15 |
| A | WO 2022/080470 A1 (TOYOBO CO., LTD.) 21 April 2022 (2022-04-21)<br>claims, examples | 1-15 |

☑ Further documents are listed in the continuation of Box C.   ☑ See patent family annex.

| | |
| --- | --- |
| \* Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **23 August 2024** | **03 September 2024** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**

| International application No. |
|---|
| **PCT/JP2024/023273** |

### C. DOCUMENTS CONSIDERED TO BE RELEVANT

| Category* | Citation of document, with indication, where appropriate, of the relevant passages | Relevant to claim No. |
|---|---|---|
| A | WO 2022/080469 A1 (TOYOBO CO., LTD.) 21 April 2022 (2022-04-21) claims, examples | 1-15 |
| A | JP 2021-178890 A (NAGOYA INSTITUTE OF TECHNOLOGY) 18 November 2021 (2021-11-18) claims, examples | 1-15 |
| A | JP 57-137344 A (THE GOODYEAR TIRE & RUBBER CO.) 24 August 1982 (1982-08-24) claims | 1-15 |

Form PCT/ISA/210 (second sheet) (July 2022)

## INTERNATIONAL SEARCH REPORT
**Information on patent family members**

International application No.

**PCT/JP2024/023273**

| Patent document cited in search report | | | Publication date (day/month/year) | Patent family member(s) | | | Publication date (day/month/year) |
|---|---|---|---|---|---|---|---|
| WO | 2020/045439 | A1 | 05 March 2020 | (Family: none) | | | |
| WO | 2023/063386 | A1 | 20 April 2023 | CN | 118076698 | A | |
| | | | | TW | 202328273 | A | |
| WO | 2023/017734 | A1 | 16 February 2023 | EP claims, examples | 4386034 | A1 | |
| | | | | CN | 117794980 | A | |
| | | | | TW | 202313767 | A | |
| WO | 2022/239439 | A1 | 17 November 2022 | EP claims, examples | 4339221 | A1 | |
| | | | | CN | 117295777 | A | |
| | | | | TW | 202302702 | A | |
| WO | 2022/080470 | A1 | 21 April 2022 | US claims, examples | 2023/0383115 | A1 | |
| | | | | EP | 4230675 | A1 | |
| | | | | CN | 116348520 | A | |
| | | | | TW | 202227545 | A | |
| WO | 2022/080469 | A1 | 21 April 2022 | US claims, examples | 2023/0383053 | A1 | |
| | | | | EP | 4230676 | A1 | |
| | | | | CN | 116390966 | A | |
| | | | | TW | 202225254 | A | |
| JP | 2021-178890 | A | 18 November 2021 | (Family: none) | | | |
| JP | 57-137344 | A | 24 August 1982 | US claims | 4370452 | A | |
| | | | | EP | 56356 | A1 | |

Form PCT/ISA/210 (patent family annex) (July 2022)

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2023115347 A

**Non-patent literature cited in the description**

- **JIANFAN QIU et al.** *Macromolecules*, 2021, vol. 54 (2), 703-712
- **L.FARGE et al.** *Macromolecules.*, 2021, vol. 54 (4), 1838-1849
- **MIKIHIRO HAYASHI et al.** *Journal of Materials Chemistry A*, 2022, vol. 34 (10), 17406-17414